# FASCICULE DE BREVET EUROPEEN

(11) **EP 4 639 108 B1**
(45) Date de publication et mention de la délivrance du brevet: **12.08.2026**
(21) Numéro de dépôt: 23841010.4
(22) Date de dépôt: 18.12.2023
(51) Int. Cl.: G01H 1/00, G01M 13/028

(54) **PROCEDE ET DISPOSITIF DE SURVEILLANCE D'UNE MACHINE TOURNANTE A PARTIR D'UN SIGNAL VIBRATOIRE**
VERFAHREN UND VORRICHTUNG ZUR ÜBERWACHUNG EINER DREHMASCHINE AUF BASIS EINES VIBRATIONSSIGNALS
METHOD AND DEVICE FOR MONITORING A ROTARY MACHINE ON THE BASIS OF A VIBRATORY SIGNAL

(30) Priorité: 21.12.2022 FR 2214143
(43) Date de publication de la demande: 29.10.2025
(73) Titulaire: SAFRAN, 75015 Paris (FR)
(72) Inventeur: ABBOUD, Dany, 77550 MOISSY-CRAMAYEL (FR); EL BADAOUI, Mohammed, 77550 MOISSY-CRAMAYEL (FR); KARKAFI, Fadi, 77550 MOISSY-CRAMAYEL (FR)
(74) Mandataire: Cabinet Beau de Loménie
(86) Numéro de dépôt international: PCT/FR2023/052034
(87) Numéro de publication internationale: WO 2024/134073

(56) Documents cités:
- US-A1- 2004 200 283
- RENATA KLEIN RENATA KLEIN ET AL: "Model Based Approach for Identification of Gears and Bearings Failure Modes", INTERNATIONAL JOURNAL OF PROGNOSTICS AND HEALTH MANAGEMENT, vol. 2, no. 2, 1 June 2011 (2011-06-01), pages 1 - 10, XP093052108, ISSN: 2153-2648, DOI: 10.36001/ijphm.2011.v2i2.1360
- RANDALL R B ET AL: "Rolling element bearing diagnostics-A tutorial", MECHANICAL SYSTEMS AND SIGNAL PROCESSING, ELSEVIER, AMSTERDAM, NL, vol. 25, no. 2, 1 February 2011 (2011-02-01), pages 485 - 520, XP027527126, ISSN: 0888-3270, [retrieved on 20101125]

## Description

### Domaine technique

La présente invention se rapporte au domaine de la surveillance des systèmes mécaniques. Plus particulièrement, la présente invention concerne un procédé de surveillance d'une machine tournante, un dispositif de surveillance, un système, un aéronef, et un programme associés. La présente invention trouve une application particulièrement avantageuse, bien que nullement limitative, pour la mise en œuvre de systèmes de surveillance de moteurs pour aéronefs.

### Technique antérieure

L'invention s'inscrit dans le contexte particulier de la surveillance de machines tournantes par analyse de signaux vibratoires. Les signaux vibratoires générés par une machine tournante permettent avantageusement de surveiller le fonctionnement de la machine tournante. En effet, ces signaux comprennent de nombreuses informations sur les défauts pouvant affecter les différentes pièces mécaniques de la machine tournante.

Dans ce contexte, un système de surveillance a pour objectif de détecter, à partir d'un signal vibratoire mesuré, un défaut de la machine tournante (e.g. un endommagement d'une pièce). Aussi, la fiabilité d'un tel système de surveillance représente un enjeu majeur pour de nombreuses applications comme l'aéronautique. Toutefois, la surveillance d'une machine tournante par analyse vibratoire requiert d'exploiter un signal vibratoire comprenant une multitude de contributions issues de différentes sources de vibrations.

De fait, une machine tournante (e.g. un moteur pour aéronef) est composée de nombreux sous-systèmes comprenant respectivement plusieurs pièces mécaniques en rotation. Le signal vibratoire mesuré comprend ainsi les contributions vibratoires de chacune des différentes pièces de la machine tournante qui, en outre, peuvent interférer les unes avec les autres. Au signal vibratoire mesuré peuvent également s'ajouter des contributions aléatoires liées à divers bruits. Aussi, pour surveiller en particulier le fonctionnement d'un sous-système d'intérêt de la machine tournante, il est nécessaire d'extraire du signal vibratoire la contribution de ce sous-système.

Les solutions existantes de séparation des sources dans un signal vibratoire se divisent notamment en deux catégories. D'une part, certaines solutions reposent sur une hypothèse d'indépendance statistique entre les différentes sources de vibrations pour les séparer les unes des autres. À titre d'exemple, le document CN102519582B illustre une telle solution exploitant une analyse en composantes principales. Néanmoins, les fortes corrélations entre les contributions vibratoires des différentes sources impliquent que l'hypothèse d'indépendance statistique n'est pas vérifiée, et rendent peu précises ces solutions.

D'autre part, des solutions de l'état de la technique exploitent les composantes fréquentielles du signal vibratoire mesuré pour séparer différentes sources de vibrations. Une telle solution est par exemple présentée dans le document CN105910701A. Pour séparer les sources de vibrations, ces solutions supposent que les composantes fréquentielles des différentes sources sont disjointes. Or, ce n'est pas le cas. Les pièces d'une machine tournante interfèrent les unes avec les autres et, à ce titre, les contributions vibratoires de différentes pièces comprennent des composantes fréquentielles communes. Ainsi, l'hypothèse utilisée par ces solutions conduit à des erreurs dans l'estimation de la contribution vibratoire d'une source d'intérêt.

Le document US2004/200283A1 décrit un procédé de détection d'un défaut d'un pignon solaire, comprenant les étapes suivantes : détecter les vibrations du pignon solaire transmises à travers chaque pignon planétaire, calculer des moyennes séparées de ces vibrations détectées, décaler en phase ces moyennes pour tenir compte des différences de positions d'engrènement des pignons, et recombiner ces moyennes décalées en phase afin de produire une valeur moyenne modifiée de la vibration du pignon solaire.

En définitive, les solutions existantes ne permettent pas d'estimer avec précision la contribution d'une des sources de vibrations d'une machine tournante. Il en résulte que la fiabilité des solutions existantes pour détecter, par analyse vibratoire, un défaut d'un sous-système d'une machine tournante n'est pas pleinement satisfaisante.

Par conséquent, il existe un besoin pour une solution de surveillance permettant, d'un signal vibratoire d'une machine tournante, de déterminer de manière fiable si un sous-système de la machine tournante est défectueux.

### Exposé de l'invention

La présente invention a pour objectif de remédier à tout ou partie des inconvénients de l'art antérieur, notamment ceux exposés précédemment.

Selon un aspect de l'invention, il est proposé un procédé de surveillance d'une machine tournante à partir d'un signal vibratoire, la machine tournante comprenant une pluralité de sous-systèmes de pièces mécaniques en rotation et le signal vibratoire comprenant des contributions vibratoires des sous-systèmes, le procédé comprenant pour au moins un dit sous-système des étapes consistant à :
- estimer la contribution vibratoire dudit sous-système d'un ensemble de moyennes synchrones du signal vibratoire comprenant :
   ∘ des premières moyennes synchrones (du signal vibratoire) associées à des fréquences de rotation des pièces dudit sous-système ; et
   ∘ une ou plusieurs deuxièmes moyennes synchrones (du signal vibratoire) associées à des multiples des fréquences de rotation des pièces dudit sous-système, ces multiples étant communs à au moins deux pièces dudit sous-système ;
- déterminer si ledit sous-système est défectueux par analyse comparative d'un indicateur dit de santé correspondant à la contribution vibratoire estimée dudit sous-système.

Dans le contexte de l'invention, nous désignons, par « signal vibratoire », un signal représentatif de la vibration de la machine tournante surveillée. Par exemple, le signal vibratoire peut être acquis par l'intermédiaire d'un accéléromètre monté sur la machine tournante.

Il convient de noter que les fréquences de rotation (i.e. vitesses de rotation) des pièces mécaniques de la machine tournante peuvent être définies de manière absolue (e.g. 10 000 tr/min) ou relative par rapport à la fréquence de rotation d'un arbre de référence (e.g. 2×f_{ref}). Ci-après, le rapport entre la fréquence de rotation d'une pièce quelconque et la fréquence de rotation de l'arbre de référence est désigné par le terme « ordre ».

En outre, par « multiple d'une fréquence de rotation », nous entendons un produit de la fréquence de rotation par un entier strictement supérieur à 1. Un multiple d'une fréquence de rotation est également désigné ci-après par le terme « harmonique ». Par ailleurs, un multiple *f* est dit commun à deux pièces, dont les fréquences de rotation respectives sont *f*₁ et *f*₂, s'il existe deux entiers *k* et *p* supérieurs à 1 tel que *f = k · f*₁ et *f* = *p* · *f*₂ + *ε*, avec |*ε*| < Δ une marge d'erreur liée à une approximation numérique.

Pour estimer la contribution vibratoire d'un sous-système de la machine tournante comprenant plusieurs pièces mécaniques en rotation, la présente invention propose d'utiliser les moyennes synchrones du signal vibratoire respectivement associées aux fréquences de rotation des pièces du sous-système - dites premières moyennes synchrones. Chacune de ces moyennes synchrones permet d'extraire les composantes fréquentielles (i.e. la fréquence fondamentale et les harmoniques) de la contribution vibratoire d'une des pièces du sous-système. En outre, il est proposé d'utiliser les moyennes synchrones du signal vibratoire associées à des multiples des fréquences de rotation (i.e. les harmoniques, les ordres) communs à plusieurs pièces du sous-système - dites deuxièmes moyennes synchrones, ce qui permet de tenir compte des interférences entre les contributions vibratoires de ces pièces.

Contrairement aux solutions existantes précitées, la présente invention ne repose ni sur une hypothèse d'indépendance statistique entre les sources de vibrations, ni sur une hypothèse de composantes fréquentielles disjointes entre les sources de vibrations. En ce sens, la solution proposée peut être qualifiée d'une solution non-paramétrique de séparation des sources et permet de tenir compte des interférences entre les pièces de la machine tournante. Par conséquent, en comparaison aux solutions existantes, la solution proposée permet d'estimer de manière plus précise la contribution vibratoire d'un sous-système d'une machine tournante.

Ainsi, la solution proposée permet d'extraire (i.e. d'isoler), du signal vibratoire mesuré, la contribution vibratoire d'un sous-système de la machine tournante. De ce fait, la solution proposée permet de déterminer de manière fiable (notamment en termes de probabilité de détection correcte et de probabilité de fausse alarme) si ce sous-système est défectueux (e.g. comprend une pièce endommagée).

La présente invention est notamment avantageuse en ce qu'elle permet de détecter un défaut de la machine tournante de manière précoce et, ainsi, d'éviter la propagation d'un endommagement d'une pièce à d'autres pièces de la machine tournante.

Selon un mode de réalisation, le procédé de surveillance comprend pour chacun des sous-systèmes de la machine tournante des étapes consistant à : estimer la contribution vibratoire dudit sous-système du signal vibratoire acquis ; et à déterminer si ledit sous-système est défectueux par analyse comparative d'un indicateur dit de santé correspondant à la contribution estimée dudit sous-système.

Ce mode de réalisation est particulièrement avantageux en ce qu'il permet de surveiller individuellement chacun des sous-systèmes de la machine tournante. Si la machine tournante présente un défaut, ce mode de réalisation permet d'identifier le ou les sous-systèmes défectueux et de programmer une maintenance adaptée.

Selon un mode de réalisation, la contribution vibratoire dudit sous-système est estimée à partir d'une différence entre : une somme desdites premières moyennes synchrones ; et une somme desdites une ou plusieurs deuxièmes moyennes synchrones.

Dans ce mode de réalisation, il est proposé d'utiliser la somme desdites premières moyennes synchrones du signal vibratoire associées aux fréquences de rotation des pièces du sous-système. Cette somme permet d'extraire les composantes fréquentielles (i.e. la fréquence fondamentale et les harmoniques) des contributions vibratoires des pièces du sous-système.

En outre, il est proposé d'éliminer la réplication des interférences entre les pièces du sous-système, et ce en soustrayant lesdites deuxièmes moyennes synchrones du signal vibratoire de la machine tournante associées aux harmoniques communes (i.e. aux ordres communs). En effet, en sommant les contributions vibratoires de chacune des pièces du sous-système, les composantes fréquentielles communes à plusieurs pièces (caractérisant les interférences entre ces pièces) sont prises en compte plusieurs fois.

Ce mode de réalisation permet d'estimer précisément la contribution vibratoire d'un sous-système du signal vibratoire de la machine tournante.

Selon un mode de réalisation, la contribution estimée dudit sous-système est exprimée par : ${x}_{A} \left(u\right) = {\sum }_{{f}_{i} ∈ {F}_{A}} {m}_{x} \left({f}_{i}, u\right) - {\sum }_{{f}_{i} ∈ {F}_{A}} {\sum }_{\begin{matrix}{f}_{j} ∈ {F}_{A} \\ {f}_{j} > {f}_{i}\end{matrix}} {m}_{x} \left(φ\left({f}_{i}, {f}_{j}\right),u\right) ,$ avec : u, un indice temporel ou angulaire ; *F_{A},* les fréquences de rotation des pièces dudit sous-système ; *φ*(*fᵢ,fᵢ*), la plus petite fréquence multiple de *fᵢ* et de *fⱼ* ; et *mₓ*(*fᵢ,u*) la moyenne synchrone du signal vibratoire x(u) associée à la fréquence *fᵢ* et définie par : ${m}_{x} \left({f}_{i}, u\right) = \frac{1}{N} {\sum }_{n = 0}^{N - 1} x \left(u-n⋅{M}_{{f}_{i}}\right) ,$ où *N* est un nombre d'échantillons moyennés du signal vibratoire x(u), et *M_{fᵢ}* est un nombre d'échantillons du signal vibratoire x(u) pour une période associée à la fréquence *fᵢ*.

La moyenne synchrone associée à *φ*(*fᵢ,fⱼ*), la plus petite fréquence multiple des fréquences de rotation *fᵢ* et *fⱼ* de deux pièces du sous-système, permet d'extraire les harmoniques communes (i.e. les ordres communs) à ces deux pièces. Ces harmoniques communes sont représentatives des interférences entre les contributions vibratoire de ces pièces.

Par conséquent, selon ce mode de réalisation, la contribution vibratoire du sous-système est obtenue en sommant les contributions vibratoires de chacune des pièces, puis en éliminant la réplication des interférences entre celles-ci.

Selon un mode de réalisation, le procédé de surveillance comprend pour au moins une pièce dudit sous-système des étapes consistant à :
- estimer la contribution vibratoire de ladite pièce d'un ensemble de moyennes synchrones de la contribution vibratoire estimée dudit sous-système comprenant :
   ∘ une troisième moyenne synchrone (de la contribution vibratoire estimée dudit sous-système) associée à une fréquence de rotation de ladite pièce ; et
   ∘ une ou plusieurs quatrièmes moyennes synchrones (de la contribution vibratoire estimée dudit sous-système) associées à des multiples de la fréquence de rotation de ladite pièce, ces multiples étant communs à ladite pièce et à au moins une autre pièce dudit sous-système ;
- déterminer si ladite pièce est défectueuse par analyse comparative d'un indicateur dit de santé correspondant à la contribution estimée de ladite pièce.

Dans ce mode de réalisation, pour estimer la contribution vibratoire d'une des pièces du sous-système, il est proposé d'utiliser la moyenne synchrone du signal vibratoire associée à la fréquence de rotation de cette pièce - dite troisième moyenne synchrone. Cette moyenne synchrone permet d'extraire les composantes fréquentielles (i.e. la fréquence fondamentale et les harmoniques) de la contribution vibratoire de la pièce considérée.

En outre, il est proposé d'utiliser les moyennes synchrones du signal vibratoire associées à des multiples de la fréquence de rotation (i.e. les harmoniques, les ordres) communs à ladite pièce considérée et aux autres pièces du sous-système - dites deuxièmes moyennes synchrones. Cela permet de tenir compte des interférences entre la pièce considérée et les autres pièces du sous-système.

Ce mode de réalisation permet d'extraire, du signal vibratoire de la machine tournante, la contribution exclusive d'une des pièces d'un sous-système de la machine tournante et de déterminer de manière fiable si cette pièce est défectueuse.

Selon un mode de réalisation, le procédé de surveillance comprend pour chacune des pièces du sous-système des étapes consistant à : estimer la contribution vibratoire de la pièce depuis la contribution vibratoire estimée du sous-système ; et à déterminer si la pièce est défectueuse par analyse comparative d'un indicateur dit de santé correspondant à la contribution estimée de ladite pièce.

Ce mode de réalisation est particulièrement avantageux en ce qu'il permet de surveiller individuellement chacune des pièces du sous-système. De la sorte, si le sous-système est défectueux, ce mode de réalisation permet d'identifier la ou les pièces du sous-système présentant défaut.

Selon un mode de réalisation, la contribution vibratoire de ladite pièce est estimée à partir d'une différence entre : ladite troisième moyenne synchrone ; et une somme desdites une ou plusieurs quatrièmes moyennes synchrones.

Dans ce mode de réalisation, ladite troisième moyenne synchrone associée à la fréquence de rotation de la pièce considérée est utilisée pour extraire les composantes fréquentielles (i.e. la fréquence fondamentale et les harmoniques) de la contribution vibratoire de la pièce.

Il est en outre proposé, pour isoler la contribution vibratoire exclusive de la pièce considérée, d'éliminer les interférences entre la pièce considérée et les autres pièces du sous-système, et ce en soustrayant lesdites quatrièmes moyennes synchrones associées à des harmoniques communes (i.e. des ordres communs).

Ainsi, ce mode de réaliser permet d'estimer précisément la contribution vibratoire d'une pièce d'un sous-système de la machine tournante depuis la contribution vibratoire du sous-système.

Selon un mode de réalisation, la contribution estimée de ladite pièce est exprimée par : ${x}_{A 1} \left(u\right) = {m}_{{x}_{A}} \left({f}_{A 1}, u\right) - {\sum }_{\begin{matrix}{f}_{j} ∈ {F}_{A} \\ {f}_{j} \neq {f}_{A 1}\end{matrix}} {m}_{{x}_{A}} \left(φ\left({f}_{A 1}, {f}_{j}\right),u\right)$ avec : u, un indice temporel ou angulaire ; *f*_{*A*1}, la fréquence de rotation de ladite pièce ; *F_{A},* les fréquences de rotation des pièces dudit sous-système ; *φ*(*f*_{*A*1},*fⱼ*), la plus petite fréquence multiple de *f*_{*A*1} et de *fⱼ* ; et *m_{x_{A}}*(*fᵢ, u*), la moyenne synchrone de la contribution vibratoire estimée *x_{A}*(*u*) dudit sous-système (S_{A}) associée à la fréquence *fᵢ* et définie par : ${m}_{{x}_{A}} \left({f}_{i}, u\right) = \frac{1}{N} {\sum }_{n = 0}^{N - 1} {x}_{A} \left(u-n⋅{M}_{{f}_{i}}\right)$ où *N* est un nombre d'échantillons moyennés de la contribution vibratoire estimée *x_{A}*(*u*), et *M_{fᵢ}* est un nombre d'échantillons de la contribution vibratoire estimée *x_{A}*(*u*) pour une période associée à la fréquence *fᵢ*.

La moyenne synchrone associée à *φ*(*f*_{*A*1},*fⱼ*), la plus petite fréquence multiple des fréquences de rotation *f*_{*A*1} et *fⱼ*, permet d'extraire les harmoniques communes (i.e. les ordres communs) à la pièce considérée et à une autre pièce du sous-système et représentatives des interférences entre ces deux pièces.

La contribution vibratoire exclusive de la pièce considérée est, selon ce mode de réalisation, obtenue en : déterminant la contribution vibratoire de la pièce considérée (y compris les interférences avec d'autres pièces) ; puis en éliminant les interférences avec les autres pièces du sous-système.

Selon un mode de réalisation, si un défaut d'un dit sous-système est détecté, le procédé de surveillance comprend pour chacune des pièces du sous-système une étape consistant à déterminer si la pièce est défectueuse par analyse comparative d'un indicateur dit de santé correspondant à la contribution estimée de ladite pièce.

Ce mode de réalisation est avantageux en ce qu'il permet de localiser précisément un défaut de la machine tournante. En effet, si un sous-système de la machine tournante est défectueux, ce mode de réalisation permet d'identifier la ou les pièces du sous-système présentant un défaut.

Selon un mode de réalisation, un défaut est détecté si une moyenne quadratique d'une dite contribution estimée est supérieure à un seuil.

Plus précisément, un sous-système est déterminé défectueux si une moyenne quadratique de la contribution vibratoire estimée dudit sous-système est supérieure à un seuil ; et une pièce est déterminée défectueuse si une moyenne quadratique de la contribution vibratoire estimée de ladite pièce est supérieure à un seuil.

Selon ce mode de réalisation, un indicateur de santé correspondant à une contribution vibratoire estimée d'un sous-système ou d'une pièce est une moyenne quadratique de la contribution vibratoire estimée du sous-système ou de la pièce. Ainsi, un défaut est détecté si cet indicateur de santé est supérieur à un seuil.

Ce mode de réalisation permet de détecter de manière fiable si un sous-système ou une pièce présente un défaut par analyse comparative d'un indicateur dit de santé correspondant à sa contribution vibratoire estimée. En effet, si une pièce ou un sous-système est défectueux, le défaut entrainera une vibration plus importante.

Selon un mode de réalisation, le procédé de surveillance comprend une étape de rééchantillonage angulaire du signal vibratoire par interpolation du signal vibratoire par rapport à un signal de référence représentatif de la rotation d'un arbre de référence de la machine tournante. En particulier, il est à noter que les rotations des pièces dudit sous-système sont liées à la rotation de l'arbre de référence.

La périodicité du signal vibratoire de la machine tournante est intrinsèquement liée à la rotation de la machine tournante. En régime stationnaire, la rotation de la machine tournante est régulière et la périodicité du signal vibratoire est constante dans le temps. Toutefois, en pratique, le régime de rotation de la machine tournante subit des fluctuations. Aussi, si ces fluctuations ne sont pas prises en compte lors de l'analyse du signal vibratoire, il peut en résulter des erreurs dans l'estimation de la contribution vibratoire d'un sous-système ou d'une pièce.

Pour cette raison, il est proposé dans ce mode de réalisation de rééchantillonner le signal vibratoire en l'interpolant par rapport au signal représentatif de la rotation d'un arbre de référence. Ce mode de réalisation permet de prendre en compte les fluctuations du régime de rotation de la machine tournante lors de l'estimation d'une contribution vibratoire d'un sous-système ou d'une pièce.

Ce mode de réalisation permet d'améliorer la précision de l'estimation d'une contribution vibratoire d'un sous-système ou d'une pièce depuis le signal vibratoire de la machine tournante.

Selon un mode de réalisation, le procédé de surveillance comprend, si un défaut d'un sous-système est détecté, une étape consistant à fournir un signal d'alarme comprenant au moins un identifiant et la contribution vibratoire estimée du sous-système défectueux.

Le signal d'alarme peut en outre comprendre : un identifiant et la contribution vibratoire estimée d'une pièce défectueuse dudit sous-système.

Ce mode de réalisation permet de signaler la présence d'un défaut de la machine tournante et d'identifier le sous-système défectueux, et notamment la pièce défectueuse. De plus, en fournissant la contribution vibratoire associée au défaut détecté, ce mode de réalisation permet de faciliter la caractérisation de celui-ci.

Par exemple, le signal d'alarme peut être fourni à un dispositif de restitution comprenant un écran, ce qui permet de faciliter la caractérisation d'un défaut affectant le sous-système ou la pièce. En effet, la contribution vibratoire d'une pièce endommagée peut être représentative de chocs répétitifs, lesquels peuvent être facilement identifiables sur un écran.

En variante, il pourrait également être envisagé de fournir le signal d'alarme à un dispositif de contrôle de la machine tournante.

Selon un aspect de l'invention, il est proposé un dispositif de surveillance d'une machine tournante à partir d'un signal vibratoire, le dispositif comprenant :
- un module d'estimation configuré pour estimer la contribution vibratoire d'un sous-système de la machine tournante d'un ensemble de moyennes synchrones du signal vibratoire comprenant :
   ∘ des premières moyennes synchrones (du signal vibratoire) associées à des fréquences de rotation des pièces dudit sous-système ; et
   ∘ une ou plusieurs deuxièmes moyennes synchrones (du signal vibratoire) associées à des multiples des fréquences de rotation des pièces dudit sous-système, ces multiples étant communs à au moins deux pièces dudit sous-système ; et
- un module de détection de défaut configuré pour déterminer si un dit sous-système est défectueux par analyse comparative d'un indicateur dit de santé correspondant à la contribution estimée dudit sous-système.

Selon un mode de réalisation, le dispositif de surveillance met en œuvre tout ou partie des étapes du procédé de surveillance proposé.

Selon un aspect de l'invention, il est proposé un système de surveillance comprenant : un dispositif d'acquisition configuré pour acquérir un signal vibratoire ; et un dispositif de surveillance conforme à l'invention.

Le système de surveillance peut comprend en outre un dispositif de restitution comprenant : un écran ; et/ou un haut-parleur. Un tel dispositif de restitution est configuré pour restituer un signal d'alarme fourni par le dispositif de surveillance si un défaut est détecté.

Selon un mode de réalisation, le dispositif d'acquisition comprend : un accéléromètre ; et/ou un microphone. Par exemple, l'accéléromètre peut être monté sur une partie fixe de la machine tournante surveillée, ou le microphone peut être placé à proximité de celle-ci.

Le dispositif d'acquisition peut comprendre en outre un tachymètre permettant de mesurer la fréquence de rotation d'un arbre de référence de la machine tournante.

Selon un aspect de l'invention, il est proposé un aéronef comprenant une machine tournante et un système de surveillance conforme à l'invention.

Dans le contexte de l'invention, le terme aéronef désigne tout dispositif capable de s'élever et de se déplacer dans les airs, tel qu'un avion, un hélicoptère, un drone, etc.

Selon un mode de réalisation, la machine tournante est un moteur à combustion ou un moteur à explosion.

Selon un aspect de l'invention, il est proposé un programme d'ordinateur comprenant des instructions pour mettre en œuvre des étapes d'un procédé de surveillance conforme à l'invention, lorsque le programme d'ordinateur est exécuté par au moins un processeur ou un ordinateur.

Le programme d'ordinateur peut être formé d'une ou plusieurs sous-parties stockées dans une même mémoire ou dans des mémoires distinctes. Le programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un aspect de l'invention, il est proposé un support d'informations lisible par ordinateur comprenant un programme d'ordinateur conforme à l'invention.

Le support d'informations peut être n'importe quelle entité ou dispositif capable de stocker le programme. Par exemple, le support peut comporter un moyen de stockage, tel qu'une mémoire non-volatile ou ROM, par exemple un CD-ROM ou une ROM de circuit microélectronique, ou encore un moyen d'enregistrement magnétique, par exemple une disquette ou un disque dur. D'autre part, le support de stockage peut être un support transmissible tel qu'un signal électrique ou optique, qui peut être acheminé via un câble électrique ou optique, par radio ou par un réseau de télécommunication ou par un réseau informatique ou par d'autres moyens. Le programme selon l'invention peut être en particulier téléchargé sur un réseau informatique. Alternativement, le support d'informations peut être un circuit intégré dans lequel le programme est incorporé, le circuit étant adapté pour exécuter ou pour être utilisé dans l'exécution du procédé en question.

Le dispositif de surveillance, le système de surveillance, l'aéronef, le programme d'ordinateur et le support d'informations proposés disposent des avantages décrits ci-dessus en lien avec le procédé de surveillance proposé.

### Brève description des dessins

D'autres caractéristiques et avantages de la présente invention ressortiront de la description fournie ci-après, illustrant des modes de réalisation de l'invention donnés à titre d'exemple et dépourvus de tout caractère limitatif, en référence aux dessins ci-joints :
La figure 1 représente un exemple d'architecture logicielle et matérielle d'un aéronef comprenant une machine tournante et un système de surveillance selon un mode de réalisation de l'invention ;
La figure 2 représente des étapes d'un procédé de surveillance d'une machine tournante selon un mode de réalisation de l'invention ;
La figure 3A et la figure 3B représentent des étapes d'un procédé de surveillance d'une machine tournante selon un mode de réalisation de l'invention ; et
La figure 4 représente un exemple d'architecture fonctionnelle d'un dispositif de surveillance d'une machine tournante selon un mode de réalisation de l'invention.

### Description des modes de réalisation

La présente invention s'applique, en particulier, à la surveillance de machines tournantes embarquées dans des aéronefs. La description suivante de l'invention se référera à ce contexte particulier, qui n'est donné qu'à titre d'exemple illustratif et ne doit pas limiter l'invention, celle-ci s'appliquant à la surveillance de toute machine tournante.

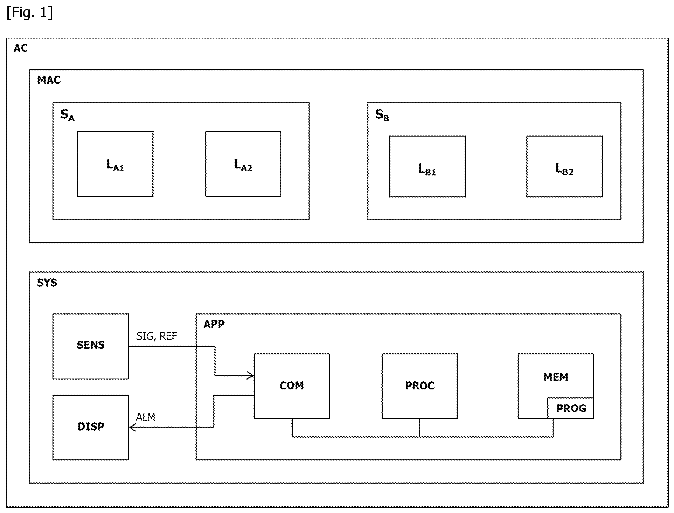

**La** **figure 1** représente un exemple d'architecture logicielle et matérielle d'un aéronef comprenant une machine tournante et un système de surveillance selon un mode de réalisation de l'invention.

L'aéronef AC illustré sur la figure 1 comprend : une machine tournante MAC ; et un système de surveillance SYS configuré pour surveiller le fonctionnement de la machine tournante MAC.

La machine tournante MAC comprend : une pluralité de sous-systèmes S_{A}-S_{B}. Chacun des sous-systèmes S_{A}-S_{B} comprenant une pluralité de pièces mécaniques L_{A1}-L_{A2}, L_{B1}-L_{B2} en rotation.

À titre indicatif, la machine tournante MAC peut être un moteur à combustion (e.g. un turboréacteur), un moteur à explosion, un compresseur, etc. Un sous-système S_{A}-S_{B} peut notamment être une boîte d'engrenages, une boite de vitesse d'un avion, ou un réducteur arrière d'un hélicoptère. Et, les pièces L_{A1}-L_{A2} peuvent par exemple appartenir à l'ensemble de pièces suivant : un arbre de transmission, un alternateur, une roue dentée, un roulement, ou une pale.

Par souci de simplicité, seuls deux sous-systèmes de deux pièces sont illustrés sur la figure 1. Toutefois, la présente invention s'applique, bien évidemment, à tout nombre de sous-systèmes dans la machine tournante et à tout nombre de pièces en rotation dans un sous-système.

Il est important de souligner que la machine tournante MAC est associée à une cinématique et que cette cinématique définit les différentes fréquences (i.e. vitesses) de rotation des pièces mécaniques de la machines tournantes MAC. Typiquement, les fréquences de rotation des pièces de la machine tournante MAC sont exprimées en un nombre entier de tours par minute.

En particulier, il est à noter que les rotations des pièces de la machine tournante MAC sont liées à la rotation d'un arbre de référence de la machine tournante MAC. Pour cette raison, les fréquences de rotation des pièces peuvent être définies manière relative par rapport à la fréquence de rotation de l'arbre de référence. Par exemple, *f*_{*A*1} = *i*_{*A*1} · *f*_{ref} avec : *f*_{*A*1}, la fréquence de rotation d'une pièce L_{A1} ; et *f*_{ref}, la fréquence de rotation de l'arbre de référence (notamment constante en régime stationnaire, et potentiellement variable en régime transitoire). Dans ce cas, nous désignons par le terme « ordre » le rapport *i*_{*A*1} entre la fréquence *f*_{*A*1} de rotation d'une pièce L_{A1} et la fréquence *f*_{ref} de rotation de l'arbre de référence.

Ainsi, chaque pièce de la machine tournante MAC est caractérisée par une fréquence (i.e. vitesse) de rotation. Plus particulièrement, lorsqu'une pièce en rotation présente un défaut, alors le défaut se manifeste au sein du signal vibratoire SIG à la fréquence de rotation de la pièce ainsi qu'à ses harmoniques (i.e. les multiples de la fréquence de rotation). Par exemple, si une roue dentée d'un engrenage présentant un défaut (e.g. une dent cassée ou endommagée), alors le défaut induit une augmentation de la vibration de la roue dentée observable à la fréquence de rotation de la roue dentée et aux harmoniques.

Toutefois, il convient de souligner que certaines harmoniques peuvent être communes à plusieurs pièces L_{A1}-L_{A2} d'un sous-système S_{A} et caractérisent ainsi les interférences entre les contributions vibratoires de ces pièces L_{A1}-L_{A2}. À titre d'exemple, considérons un sous-système S_{A} comprenant : une première pièce L_{A1} dont la fréquence de rotation est 2*f*_{ref} ; et une deuxième pièce L_{A2} dont la fréquence de rotation est 3*f*_{ref}. Alors, selon cet exemple, les harmoniques communes aux contributions vibratoires des pièces L_{A1} et L_{A2} sont les suivantes : 6*f*_{ref}, 12*f*_{ref}, 18*f*_{ref}, ... < *Fₛ*/2 ; ou, de manière équivalente, les ordres communs aux contributions vibratoires des pièces L_{A1} et L_{A2} sont les suivants : 6, 12,18, ... < *Fₛ*/2*f*_{ref}.

Le système de surveillance SYS comprend : un dispositif d'acquisition SENS configuré pour acquérir un signal vibratoire SIG de la machine tournante MAC ; et un dispositif de surveillance APP configuré pour surveiller le fonctionnement de la machine tournante MAC à partir du signal vibratoire SIG.

Dans le contexte de l'invention, il peut être envisagé d'utiliser le système de surveillance SYS pour surveiller différents types de machines tournantes, par exemple à bord d'un aéronef tel qu'illustré sur la figure 1 ou sur un banc d'essai.

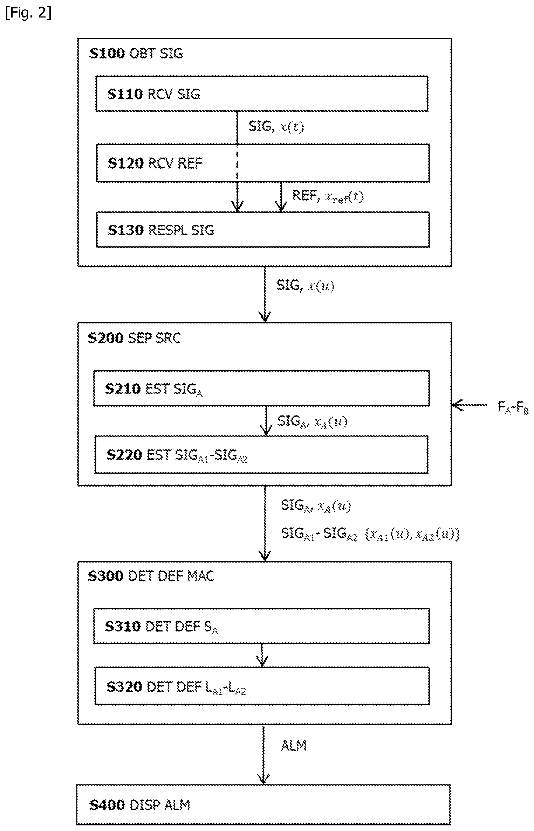

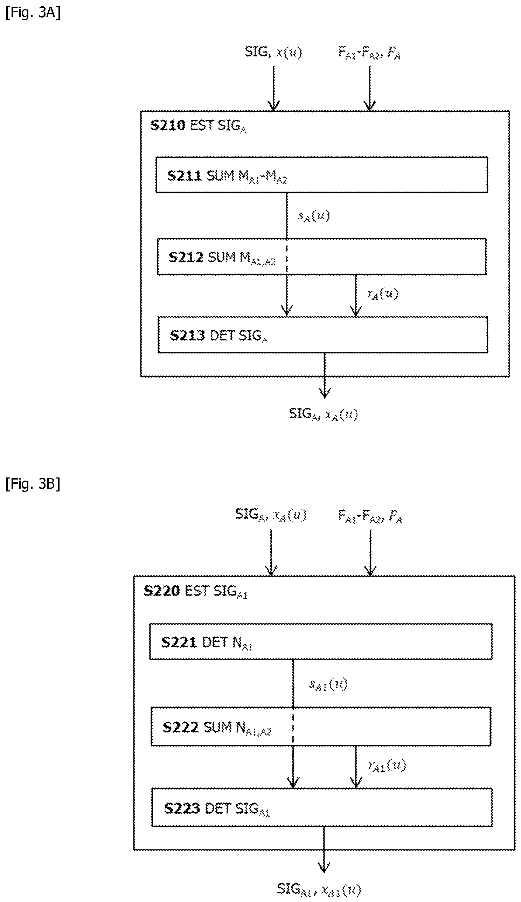

Plus particulièrement, le dispositif de surveillance APP est configuré pour détecter un défaut de la machine tournante MAC (e.g. une pièce endommagée). À cet effet, le dispositif de surveillance APP est configuré pour : prendre en entrée le signal vibratoire SIG de la machine tournante MAC ; et si un défaut est détecté, fournir en sortie un signal d'alarme ALM. Le fonctionnement du dispositif de surveillance APP est décrit plus en détails ci-après en référence aux figures 2 et 3A-3B.

Selon le mode de réalisation illustré par la figure 1, le système de surveillance SYS comprend en outre un dispositif de restitutions DISP configuré pour restituer le signal d'alarme ALM fourni par le dispositif de surveillance APP.

Le dispositif d'acquisition SENS est configuré pour acquérir (i.e. mesurer) sur une durée déterminée un signal vibratoire SIG générée par la machine tournante MAC lors de son fonctionnement.

Il convient de souligner que le signal vibratoire SIG mesuré comprend les contributions vibratoires des différentes pièces L_{A1}-L_{A2}, L_{B1}-L_{B2} de la machine tournante MAC et, en outre, des contributions aléatoires liées à divers bruits, provenant par exemple de sources aérodynamiques ou électromagnétiques.

En particulier, le dispositif d'acquisition SENS peut comprendre un accéléromètre monté sur une partie fixe, ou un microphone placé à proximité de la machine tournante MAC. Toutefois, dans le contexte de l'invention, il pourrait être envisagé d'utiliser tout type de signal acquis par un capteur et représentatif de la vibration de la machine tournante MAC lors de son fonctionnement.

Le dispositif d'acquisition SENS comprend notamment une chaîne d'acquisition apte à numériser (voire à amplifier et à filtrer) le signal (analogique) acquis par l'accéléromètre ou le microphone.

Nous notons ci-après x(t) le signal vibratoire SIG numérique disponible à la sortie du dispositif d'acquisition SENS. Le signal x(t) est un signal temporel échantillonné avec une fréquence d'échantillonnage *Fₛ* et la longueur du signal x(t) dépend de la durée de la mesure effectuée par le dispositif d'acquisition SENS.

Selon un mode de réalisation, le dispositif d'acquisition SENS comprend en outre un tachymètre permettant de mesurer la fréquence (i.e. vitesse) de rotation de l'arbre de référence. Le dispositif d'acquisition SENS est ainsi configuré pour fournir, au dispositif de surveillance APP, un signal de référence REF (également dit signal tachymétrique) noté *x*_{ref}(*t*) et représentatif de la rotation de l'arbre de référence. Le signal de référence REF peut notamment être utilisé pour rééchantillonner le signal vibratoire SIG tel que décrit ci-après en référence à la figure 2.

Le dispositif de restitution DISP est configuré pour restituer le signal d'alarme ALM fourni par le dispositif de surveillance APP si un défaut de la machine tournante MAC est détecté.

Selon un mode de réalisation, le signal d'alarme ALM comprend au moins un élément parmi les suivants : un identifiant d'un sous-système défectueux ; la contribution vibratoire associée au sous-système défectueux ; un identifiant d'une pièce défectueuse ; et la contribution vibratoire associée à la pièce défectueuse.

Le dispositif de restitution DISP peut comprendre un écran permettant d'afficher l'identifiant du sous-système et/ou de la pièce présentant un défaut et de visualiser la contribution vibratoire associée à ce défaut. Le dispositif de restitution DISP peut en outre comprendre un haut-parleur.

Toutefois, dans le contexte de l'invention, il pourrait également être envisagé des modes de réalisations selon lesquels le dispositif de surveillance APP fournit, si un défaut est détecté, un signal d'alarme ALM à un dispositif de contrôle de la machine tournante MAC ou de l'aéronef AC.

Le dispositif de surveillance APP comprend selon le mode de réalisation illustré par la figure 1 : au moins une unité de traitement ou processeur PROC ; et au moins une mémoire MEM.

Plus particulièrement, le dispositif de surveillance APP dispose, selon un mode de réalisation, de l'architecture matérielle d'un ordinateur. À ce titre, le dispositif de surveillance APP peut comprendre un processeur PROC, une mémoire vive, une mémoire morte MEM, et une mémoire non volatile. La mémoire MEM associée au dispositif APP constitue un support d'informations conforme à l'invention, lisible par ordinateur et par le processeur PROC, sur lequel est enregistré un programme d'ordinateur PROG conforme à l'invention. Le programme d'ordinateur PROG comporte des instructions pour réaliser des étapes d'un procédé de surveillance conforme à l'invention et mises en œuvre par le dispositif de surveillance APP, lorsque le programme d'ordinateur PROG est exécuté par le processeur PROC.

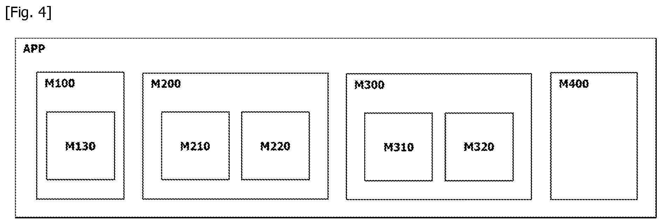

Le programme d'ordinateur PROG définit des modules fonctionnels et logiciels du dispositif de surveillance APP décrits ci-après en référence à la figure 4.

Tel qu'illustré par la figure 1, selon un mode de réalisation, le dispositif APP dispose d'un module de communication COM configuré pour communiquer avec le dispositif d'acquisition SENS et/ou le dispositif de restitution DISP. Aucune limitation n'est attachée à la nature des interfaces de communication entre ces dispositifs, qui peuvent être filaire ou non filaire, et peuvent mettre en œuvre tout protocole connu de l'homme du métier.

**La** **figure 2** représente des étapes d'un procédé de surveillance d'une machine tournante selon un mode de réalisation de l'invention. Plus précisément, cette figure présente le fonctionnement du dispositif de surveillance APP introduit en référence à la figure 1.

Tel qu'illustré par la figure 2, et selon un mode de réalisation, le procédé de surveillance proposé comprend au moins une des étapes S100 à S400 décrites ci-après et mises en œuvre par le dispositif de surveillance APP proposé.

À l'étape S100, le dispositif de surveillance APP obtient le signal vibratoire SIG de la machine tournante MAC. En particulier, l'étape S100 comprend selon un mode de réalisation au moins une des étapes S110 à S130 suivantes.

À l'étape S110, le dispositif de surveillance APP reçoit le signal vibratoire SIG, en provenance du dispositif d'acquisition SENS, et notamment par l'intermédiaire de son module de communication COM.

En variante, le dispositif de surveillance APP pourrait à l'étape S110 lire le signal vibratoire sur une mémoire partagée avec le dispositif d'acquisition SENS.

À l'étape S120, le dispositif de surveillance APP obtient le signal de référence REF (également dit signal tachymétrique) représentatif de la rotation de l'arbre de référence. Par exemple, le dispositif de surveillance APP reçoit le signal de référence REF, en provenance du dispositif d'acquisition SENS, et notamment par l'intermédiaire de son module de communication COM.

Tel que précédemment mentionné, le signal de référence REF peut être acquis par un tachymètre et ainsi représenter la rotation de l'arbre de référence au cours du temps, et plus particulièrement la fréquence (i.e. vitesse) de rotation de l'arbre de référence.

À l'étape S130, le dispositif de surveillance APP réalise un rééchantillonage angulaire du signal vibratoire *x*(*t*) en l'interpolant par rapport au signal de référence *x*_{ref}(*t*). Le signal vibratoire angulaire ainsi obtenu est noté *x*(*θ*).

Le rééchantillonage angulaire est réalisé en fonction de la rotation de l'arbre de référence pour tenir compte de variations éventuelles de la fréquence (i.e. vitesse) de rotation de la machine tournante MAC lors de la durée d'acquisition du signal vibratoire *x*(*t*).

Le procédé proposé pouvant s'appliquer à la fois à un signal vibratoire temporel ou angulaire, nous utilisons ci-après la notation *x*(*u*) pour désigner le signal vibratoire temporel *x*(*t*) ou le signal vibratoire angulaire *x*(*θ*), *u* étant un indice temporel *t* ou un indice angulaire *θ*.

Dans le contexte de l'invention, il pourrait également être envisagé des modes de réalisation selon lesquels le dispositif d'acquisition SENS fournit directement en sortie un signal vibratoire angulaire *x*(*θ*), par exemple en réalisant l'acquisition d'échantillons à un pas angulaire fixe de la machine tournante MAC.

À l'étape S200, le dispositif de surveillance APP, pour au moins un ensemble d'une ou plusieurs pièces de la machine tournante MAC, estime la contribution vibratoire de l'ensemble de pièces depuis le signal vibratoire SIG. Autrement dit, le dispositif de surveillance APP réalise au cours de cette étape une séparation des sources de vibrations.

L'étape S200 comprend au moins une des étapes S210 et S220. Notons que le procédé de surveillance peut comprendre une ou plusieurs itérations des étapes S200, S210 et S220.

À l'étape S210, le dispositif de surveillance APP estime, pour au moins un sous-système S_{A}-S_{B} de la machine tournante MAC, la contribution vibratoire SIG_{A} du sous-système S_{A} depuis le signal vibratoire SIG. La mise en œuvre de l'estimation réalisée à l'étape S210 est décrite plus en détail en référence à la figure 3A.

En particulier, selon un mode de réalisation, le dispositif de surveillance APP estime la contribution vibratoire de chacun des sous-systèmes S_{A}-S_{B} de la machine tournante MAC.

À l'étape S220, le dispositif de surveillance APP estime, pour au moins une pièce L_{A1} d'un sous-système S_{A}, la contribution vibratoire SIG_{A1} de la pièce L_{A1} depuis la contribution vibratoire estimée SIG_{A} du sous-système S_{A}. La mise en œuvre de l'estimation réalisée à l'étape S220 est décrite plus en détail en référence à la figure 3B.

Selon un mode de réalisation, le dispositif de surveillance APP estime la contribution vibratoire SIG_{A1}-SIG_{A2} de chacune de pièces L_{A1}-L_{A2} d'un sous-système S_{A}. En outre, le dispositif de surveillance APP peut estimer la contribution vibratoire de chacune des pièces L_{A1}-L_{A2}, L_{B1}-L_{B2} de chacun des sous-systèmes S_{A}-S_{B} de la machine tournante MAC.

Il convient de souligner que le dispositif de surveillance APP utilise la cinématique F_{A}-F_{B} de la machine tournante MAC pour estimer la contribution vibratoire d'un sous-système S_{A} et/ou d'une pièce L_{A1}. En particulier, cette cinématique F_{A}-F_{B} définit les différentes fréquences de rotation (de manière absolue ou relative) des pièces mécaniques de la machines tournante MAC.

À l'étape S300, le dispositif de surveillance APP détermine si la machine tournante MAC est défectueuse. Autrement dit, le dispositif de surveillance APP détecte au cours de cette étape la présence d'un défaut de la machine tournante MAC (e.g. une pièce endommagée). À cet effet, l'étape S300 comprend au moins une des étapes S310 et S320.

À l'étape S310, le dispositif de surveillance APP détermine, pour au moins un sous-système S_{A} de la machine tournante MAC, si le sous-système S_{A} est défectueux par analyse comparative de l'indicateur de santé correspondant à la contribution vibratoire estimée SIG_{A} du sous-système S_{A}.

Selon un mode de réalisation, pour détecter un défaut d'un sous-système S_{A}, le dispositif de surveillance APP détermine, de la contribution estimée SIG_{A} du sous-système S_{A}, au moins un indicateur de santé représentatif de la présence d'un défaut du sous-système S_{A} et compare ledit au moins un indicateur de santé à un seuil.

Par exemple, un indicateur de santé pouvant être utilisé est la moyenne quadratique (ou « Root Mean Square » en anglais) de la contribution vibratoire. En effet, la vibration d'une pièce endommagée est plus importante. Pour cette raison, et selon un mode de réalisation, le dispositif de surveillance APP détermine qu'un sous-système S_{A} est défectueux si la moyenne quadratique (sur un nombre d'échantillons L donné) de la contribution vibratoire estimée SIG_{A} du sous-système S_{A} est supérieure à un seuil, e.g. $\sqrt{\frac{1}{L} {\sum }_{l = 0}^{L - 1} {x}_{A} {\left(u-l\right)}^{2}} > λ$.

En variante, le dispositif de surveillance APP pourrait utiliser, comme indicateurs de santé, le kurtosis et/ou le coefficient d'asymétrie (« skewness » en anglais) de la contribution vibratoire estimée SIG_{A} (sur un nombre d'échantillons donné). Toutefois, aucune limitation n'est attachée à la nature des indicateurs de santé utilisés par le dispositif de surveillance APP.

Selon un mode de réalisation, le dispositif de surveillance APP détermine, pour chacun des sous-systèmes S_{A}-S_{B} de la machine tournante MAC, si ce sous-système S_{A}, S_{B} est défectueux.

Selon un mode de réalisation, si (et seulement si) un défaut du sous-système S_{A} est détecté à l'étape S310, le dispositif de surveillance APP met en œuvre l'étape S320. Autrement dit, la détection d'un défaut d'un sous-système S_{A} déclenche la mise en œuvre de l'étape S320.

À l'étape S320, le dispositif de surveillance APP détermine, pour au moins une pièce L_{A1} d'un sous-système S_{A}, si la pièce L_{A1} est défectueuse par analyse comparative de l'indicateur de santé correspondant à la contribution vibratoire estimée SIG_{A1} de la pièce L_{A1}.

Selon un mode de réalisation, pour détecter un défaut d'une pièce L_{A1}, le dispositif de surveillance APP détermine, de la contribution vibratoire estimée SIG_{A1}, au moins un indicateur dit de santé représentatif de la présence d'un défaut de la pièce L_{A1} et compare ledit au moins un indicateur de santé à un seuil.

Notamment, le dispositif de surveillance APP peut détecter un défaut d'une pièce en utilisant un indicateur de santé basé sur la moyenne quadratique tel que décrit ci-dessus. Toutefois, dans le contexte de l'invention, il pourrait également être envisagé des modes de réalisation dans lesquels différents indicateurs de santé sont utilisés en fonction de la pièce analysée au cours de l'étape S320.

Selon un mode de réalisation, le dispositif de surveillance APP détermine, pour chacune des pièces L_{A1}-L_{A2} d'un sous-système S_{A}, si cette pièce L_{A1}, L_{A2} est défectueuse, notamment si un défaut du sous-système S_{A} est détecté à l'étape S310.

Selon un mode de réalisation, le dispositif de surveillance APP détermine, pour chacune des pièces L_{A1}-L_{A2}, L_{B1}-L_{B2} de la machine tournante MAC, si cette pièce est défectueuse.

À l'étape S400, si un défaut de la machine tournante MAC est détecté à l'étape S300, le dispositif de surveillance APP fournit au moins un signal d'alarme ALM.

Selon un mode de réalisation, si un défaut d'un sous-système S_{A} est détecté à l'étape S310, ledit au moins un signal d'alarme ALM comprend : un identifiant du sous-système défectueux S_{A} ; et la contribution vibratoire SIG_{A} du sous-système défectueux S_{A}. En outre, selon un mode de réalisation, si un défaut d'une pièce L_{A1} d'un sous-système S_{A} est détecté à l'étape S320, ledit au moins un signal d'alarme ALM comprend : un identifiant de la pièce défectueuse L_{A1} ; et la contribution vibratoire SIG_{A} de la pièce défectueuse L_{A1}.

De manière préférentielle, le signal d'alarme ALM comprend : un identifiant du sous-système et la contribution vibratoire SIG_{A} du sous-système défectueux S_{A} ; et un identifiant et la contribution vibratoire SIG_{A} de la pièce défectueuse L_{A1}. En ce sens, le signal d'alarme ALM peut être qualifié de signal d'alarme à deux niveaux, avec un niveau sous-système et un niveau pièce.

Tel que précédemment décrit, et selon un mode de réalisation, le dispositif de surveillance APP transmet le signal d'alarme ALM au dispositif de restitution DISP, notamment par l'intermédiaire de son module de communication COM.

De plus, selon un mode de réalisation, le dispositif de surveillance APP fournit en sortie les indicateurs de santé déterminés aux cours des étapes S310 et S320.

**La** **figure 3A** représente des étapes d'un procédé de surveillance d'une machine tournante selon un mode de réalisation de l'invention. Cette figure détaille l'étape S210 d'estimation de la contribution vibratoire SIG_{A} d'un sous-système S_{A} depuis le signal vibratoire SIG.

Nous rappelons ici que, pour séparer les différentes sources de vibrations, le dispositif de surveillance APP exploite la cinématique de la machine tournante MAC et que cette cinématique définit les différentes fréquences (i.e. vitesses) de rotation des pièces mécaniques de la machine tournante MAC. En particulier, nous notons *F_{A}* l'ensemble des fréquences de rotation F_{A1}-F_{A2} des pièces L_{A1}-L_{A2} d'un sous-système S_{A}.

En outre, les fréquences F_{A1}-F_{A2} de rotation des pièces L_{A1}-L_{A2} peuvent être définies de manière relative par rapport à la fréquence de rotation d'un arbre de référence de machine. Par exemple, *f*_{*A*1} = *i*_{*A*1} · *f*_{ref} avec : *f*_{*A*1}, la fréquence de rotation F_{A1} d'une pièce L_{A1} ; et *f*_{ref}, la fréquence de rotation de l'arbre de référence ; et *i*_{*A*1}, ledit ordre associée à la pièce L_{A1}.

À l'étape S210, le dispositif de surveillance APP estime, pour au moins un sous-système S_{A} de la machine tournante MAC, la contribution vibratoire SIG_{A} du sous-système S_{A} depuis le signal vibratoire SIG. Pour ce faire, selon le mode de réalisation illustré par la figure 3A, l'étape S210 comprend au moins une des étapes S211 à S213.

À l'étape S211, le dispositif de surveillance APP détermine un signal *s_{A}(u)* associé au sous-système S_{A} considéré et exprimé par : ${s}_{A} \left(u\right) = {\sum }_{{f}_{i} ∈ {F}_{A}} {m}_{x} \left({f}_{i}, u\right) ,$
avec *mₓ*(*fᵢ,u*), la moyenne synchrone du signal vibratoire x(u) associée à la fréquence *fᵢ* définie par : ${m}_{x} \left({f}_{i}, u\right) = \frac{1}{N} {\sum }_{n = 0}^{N - 1} x \left(u-n⋅{M}_{{f}_{i}}\right) ,$
où *N* est un nombre d'échantillons moyennés (i.e. un nombre de sections moyennées) du signal vibratoire SIG, et *M_{fᵢ}* est le nombre d'échantillons du signal vibratoire SIG par période associée à la fréquence *fᵢ*. Par exemple, le nombre d'échantillons *M_{fᵢ} = Fₛ*/*fᵢ,* avec *F_{S}* la fréquence d'échantillonnage du signal vibratoire SIG.

Dans l'expression ci-dessus, les moyennes synchrones M_{A1}-M_{A2} permettent d'extraire les composantes fréquentielles (i.e. la fréquence fondamentale et les harmoniques) de la contribution vibratoire de chacune des pièces L_{A1}-L_{A2} du sous-système S_{A}. Toutefois, il convient de souligner que certaines composantes fréquentielles sont communes à plusieurs pièces L_{A1}-L_{A2} du sous-système S_{A}, caractérisant ainsi les interférences entre ces pièces tel que précédemment discuté.

Ainsi, en sommant les contributions vibratoires de chacune des pièces L_{A1}-L_{A2} du sous-système S_{A} tel que décrit dans l'équation 1, les composantes fréquentielles communes à plusieurs pièces sont prises en compte plusieurs fois. Autrement dit, les interférences entre les pièces L_{A1}-L_{A2} du sous-système S_{A} sont répliquées.

Par conséquent, le signal *s_{A}(u)* obtenu comprend : la contribution vibratoire du sous-système S_{A} considérée ; et la réplication des interférences entre les pièces L_{A1}-L_{A2} du sous-système S_{A}.

À l'étape S212, le dispositif de surveillance APP détermine un signal *r_{A}(u)* en utilisant l'expression suivante : ${r}_{A} \left(u\right) = {\sum }_{{f}_{i} ∈ {F}_{A}} {\sum }_{\begin{matrix}{f}_{j} ∈ {F}_{A} \\ {f}_{j} > {f}_{i}\end{matrix}} {m}_{x} \left(φ\left({f}_{i}, {f}_{j}\right),u\right) ,$
avec *φ*(*fᵢ,fⱼ*)*,* la plus petite fréquence multiple de *fᵢ* et de *fⱼ.* Plus précisément, nous avons : *φ*(*fᵢ,fⱼ) = k · fᵢ,* avec *k* un entier supérieur à 1 ; et *φ*(*fᵢ,fⱼ*) *= p · fⱼ + ε,* avec *p* un entier supérieur à 1 et |*ε*| < Δ une marge d'erreur liée à une approximation numérique.

La moyenne synchrone M_{A1,A2} associée à la plus petite fréquence (ou ordre) multiple des fréquences de rotation F_{A1} et F_{A2} de deux pièces L_{A1} et L_{A2} du sous-système S_{A} permet d'extraire les composantes fréquentielles communes aux deux pièces L_{A1} et L_{A2}.

De fait, le signal *r_{A}(u)* est représentatif des interférences entre les pièces L_{A1}-L_{A2} du sous-système S_{A}.

Typiquement, pour les pièces L_{A1}-L_{A2} d'un sous-système S_{A}, les valeurs {*φ*(*fᵢ,fⱼ*) | *fᵢ* ∈ *F_{A}*,*fⱼ* E *F_{A}*} sont stockées dans une matrice dite des ordres communs. Tel qu'indiqué dans l'équation 3, seules les valeurs *φ*(*fᵢ*,*fⱼ*) avec *fᵢ > fⱼ* sont utilisées de telle sorte que la matrice des ordres communs est une matrice triangulaire supérieure.

Lorsque les pièces L_{A1}-L_{A2} d'un sous-système S_{A} sont liées mécaniquement à l'arbre de référence par l'intermédiaire d'un ou plusieurs engrenages, les valeurs {*φ*(*fᵢ*,*fⱼ*)} peuvent être obtenues (notamment de manière analytique) par le nombre de dents des pièces L_{A1}-L_{A2} du sous-système S_{A} et par la fréquence de rotation de l'arbre de référence *f*_{ref}.

En variante, pour deux pièces L_{A1} et L_{A2} d'un sous-système S_{A}, la valeur *φ*(*f*_{*A*1},*f*_{*A*2}) peut être déterminée par les fréquences de rotations *f*_{A1} et *f*_{*A*2} des pièces en utilisant un algorithme de recherche numérique.

À l'étape S213, le dispositif de surveillance APP estime la contribution vibratoire SIG_{A} du sous-système S_{A} notée *x_{A}*(*u*) en utilisant l'expression suivante : ${x}_{A} \left(u\right) = {s}_{A} \left(u\right) - {r}_{A} \left(u\right) ,$

Nous rappelons ici que le signal *s_{A}(u)* comprend à la fois la contribution vibratoire du sous-système S_{A} considéré et la réplication des interférences entre les pièces L_{A1}-L_{A2} du sous-système S_{A}. Ainsi, en éliminant du signal *s_{A}(u)* la réplication des interférences *r_{A}(u),* une estimation de la contribution vibratoire SIG_{A} du sous-système S_{A} considéré est obtenue.

La contribution vibratoire SIG_{A} du sous-système S_{A} est ensuite utilisée à l'étape S310 pour déterminer si le sous-système S_{A} considéré est défectueux.

Comme cela a été décrit ci-dessus, la contribution vibratoire SIG_{A} du sous-système S_{A} est estimée à partir des : moyennes synchrones M_{A1}-M_{A2} (lesdites premières moyennes synchrones) associées aux fréquences de rotation F_{A1}-F_{A2} des pièces L_{A1}-L_{A2} du sous-système S_{A} ; et des moyennes synchrones M_{A1,A2} (lesdites deuxièmes moyennes synchrones) associées à des multiples des fréquences de rotation F_{A1}-F_{A2} des pièces L_{A1}-L_{A2} et communs à au moins deux pièces du sous-système. Cependant, dans le cadre de l'invention, il pourrait également être envisagé d'estimer la contribution vibratoire d'un sous-système à partir des premières et deuxièmes moyennes synchrones en utilisant des expressions autres que celle définie par l'équation (4) ci-dessus. Par exemple, il pourrait être envisagé d'utiliser un réseau de neurones (ou un autre algorithme d'apprentissage automatique) prenant en entrée les premières et deuxièmes moyennes synchrones, et fournissant en sortie la contribution vibratoire estimée du sous-système.

**La** **figure 3B** représente des étapes d'un procédé de surveillance d'une machine tournante selon un mode de réalisation de l'invention. Cette figure détaille en particulier l'étape S220 d'estimation de la contribution vibratoire d'une pièce L_{A1} depuis la contribution vibratoire d'un sous-système SIG_{A}.

À l'étape S220, le dispositif de surveillance APP estime, pour au moins une pièce L_{A1} d'un sous-système S_{A} de la machine tournante MAC, la contribution vibratoire SIG_{A1} de la pièce L_{A1} depuis la contribution vibratoire estimée SIG_{A} du sous-système S_{A}. À cet effet, selon le mode de réalisation illustré par la figure 3B, l'étape S220 comprend au moins une des étapes S221 à S223.

À l'étape S221, le dispositif de surveillance APP détermine un signal *s*_{*A*1}(*u*) associé à la pièce L_{A1} considérée et exprimé par : ${s}_{A 1} \left(u\right) = {m}_{{x}_{A}} \left({f}_{A 1}, u\right) ,$
avec : *f*_{*A*1}, la fréquence de rotation de la pièce L_{A1} ; et *m_{x_{A}}*(*f*_{*A*1}*, u*), la moyenne synchrone N_{A1} de la contribution vibratoire *x_{A}*(*u*) dudit sous-système associée à la fréquence *f*_{*A*1} et définie par : ${m}_{{x}_{A}} \left({f}_{A 1}, u\right) = \frac{1}{N} {\sum }_{n = 0}^{N - 1} {x}_{A} \left(u-n⋅{M}_{{f}_{A 1}}\right) ,$

La moyenne synchrone N_{A1} permet d'extraire les composantes fréquentielles de la contribution vibratoire de la pièce L_{A1}. Toutefois, certaines composantes fréquentielles sont communes à la pièce L_{A1} et à d'autres pièces L_{A2} du sous-système S_{A}, caractérisant ainsi les interférences entre ces pièces.

De fait, le signal *s*_{*A*1}(*u*) obtenu comprend : la contribution vibratoire de la pièce L_{A1} considérée ; et les interférences entre la pièce L_{A1} et les autres pièces du sous-système S_{A}.

À l'étape S222, le dispositif de surveillance APP détermine un signal *r*_{*A*1}(*u*) représentatif des interférences entre la pièce L_{A1} considérée et les autres pièces du sous-système S_{A}. Le signal *r*_{*A*1}(*u*) est obtenu en en utilisant l'expression suivante : ${r}_{A 1} \left(u\right) = {\sum }_{\begin{matrix}{f}_{j} ∈ {F}_{A} \\ {f}_{j} \neq {f}_{A 1}\end{matrix}} {m}_{{x}_{A}} \left(φ\left({f}_{A 1}, {f}_{j}\right),u\right) ,$
avec *φ*(*f*_{*A*1},*fⱼ*), la plus petite fréquence multiple de *f*_{*A*1} et de *fⱼ.*

La moyenne synchrone N_{A1,A2} associée à la plus petite fréquence multiple des fréquences de rotation F_{A1} et F_{A2} de la pièce L_{A1} et d'une autre pièce L_{A2} du sous-système S_{A} permet d'extraire les composantes fréquentielles communes aux deux pièces L_{A1} et L_{A2}. Ainsi, le signal *r*_{*A*1}(*u*) permet de décrire les interférences entre la pièce L_{A1} considérée et les autres pièces L_{A2} du sous-système S_{A}.

À l'étape S223, le dispositif de surveillance APP estime la contribution vibratoire SIG_{A1} de la pièce L_{A1} notée *x*_{*A*1}(*u*) en utilisant l'expression suivante : ${x}_{A 1} \left(u\right) = {s}_{A 1} \left(u\right) - {r}_{A 1} \left(u\right) ,$

Tel que mentionné ci-dessus, le signal *s*_{*A*1}(*u*) permet d'extraire les composantes fréquentielles de la contribution vibratoire de la pièce L_{A1}, mais certaines de ces composantes fréquentielles sont communes à la pièce L_{A1} et à d'autres pièces L_{A2} du sous-système S_{A}. Pour cette raison, il est proposé ici d'éliminer du signal *s*_{*A*1}(*u*) les interférences *r*_{*A*1}(*u*)*,* ce qui permet d'isoler la contribution vibratoire exclusive SIG_{A1} de la pièce L_{A1} considérée.

La contribution vibratoire SIG_{A1} de la pièce L_{A1} est ensuite utilisée à l'étape S320 pour déterminer si la pièce L_{A1} considérée est défectueuse.

Selon un mode de réalisation, si un défaut de la pièce L_{A1} considérée est détecté, le dispositif de surveillance APP utilise le signal *r*_{*A*1}(*u*) représentatif des interférences pour déterminer si le défaut se propage (i.e. émerge) sur d'autres pièces L_{A2} du sous-système S_{A}. À cet effet, le dispositif de surveillance APP détermine au moins un indicateur de santé pour le signal *r*_{*A*1}(*u*) et compare ledit au moins un indicateur de santé à un seuil.

Comme cela a été décrit ci-dessus, la contribution vibratoire SIG_{A1} de la pièce L_{A1} du sous-système S_{A} est estimée à partir de : la moyenne synchrone N_{A1} (ladite troisième moyenne synchrone) associée à la fréquence de rotation F_{A1} de la pièce L_{A1}; et des moyennes synchrones N_{A1,A2} (lesdites quatrièmes moyennes synchrones) associées à des multiples de la fréquence de rotation F_{A1} de la pièce L_{A1} communs à la pièce L_{A1} et à au moins une autre pièce L_{A2} du sous-système S_{A}. Cependant, dans le cadre de l'invention, il pourrait également être envisagé d'estimer la contribution vibratoire d'une pièce d'un sous-système à partir de la troisième et des quatrièmes moyennes synchrones en utilisant des expressions autres que celle définie par l'équation (8) ci-dessus. Par exemple, il pourrait être envisagé d'utiliser un réseau de neurones (ou un autre algorithme d'apprentissage automatique) prenant en entrée la troisième et les quatrièmes moyennes synchrones, et fournissant en sortie la contribution vibratoire estimée de la pièce.

**La** **figure 4** représente un exemple d'architecture fonctionnelle d'un dispositif de surveillance d'une machine tournante selon un mode de réalisation de l'invention.

De manière générale, le dispositif de surveillance APP comprend des modules respectivement configuré pour mettre en œuvre chacune des étapes d'un procédé de surveillance conforme à l'invention.

En particulier, et tel qu'illustré par la figure 4, le dispositif de surveillance APP proposé comprend selon un mode de réalisations au moins un des modules suivants :
- un module d'obtention M100 configuré pour obtenir un signal vibratoire SIG de la machine tournante, comprenant notamment :
   o un module de rééchantillonage M130 configuré pour réaliser un rééchantillonage S130 angulaire du signal vibratoire SIG par interpolation du signal vibratoire SIG par rapport au signal de référence REF représentatif de la rotation d'un arbre de référence ;
- un module d'estimation M200 configuré pour estimer la contribution vibratoire d'un ensemble d'une ou plusieurs pièces de la machine tournante MAC à partir du signal vibratoire SIG, comprenant au moins un des modules suivants :
   o un module d'estimation de vibrations d'un sous-système M210 configuré pour estimer la contribution vibratoire SIG_{A} d'un sous-système S_{A}-S_{B} de la machine tournante MAC à partir du signal vibratoire SIG ; et
   o un module d'estimation de vibrations d'une pièce M220 configuré pour estimer la contribution vibratoire SIG_{A1} d'une pièce L_{A1} d'un sous-système S_{A} de la machine tournante MAC depuis la contribution vibratoire SIG_{A} du sous-système S_{A} ;
- un module de détection de défaut M300 configuré pour détecter un défaut de la machine tournante MAC, comprenant au moins un des modules suivants :
   ∘ un module de détection de défaut d'un sous-système M310 configuré pour déterminer si un sous-système S_{A}-S_{B} de la machine tournante MAC est défectueux par analyse comparative de l'indicateur de santé correspondant à la contribution vibratoire estimée SIG_{A}-SIG_{B} du sous-système S_{A}-S_{B} ; et
   ∘ un module de détection de défaut d'une pièce M320 configuré pour déterminer si une pièce L_{A1}-L_{A2} d'un sous-système S_{A} de la machine tournante MAC est défectueuse par analyse comparative de l'indicateur de santé correspondant à la contribution vibratoire estimée SIG_{A1}-SIG_{A2} de la pièce L_{A1}-L_{A2} ; et
- un module de fourniture M400 configuré pour fournir un ou plusieurs signaux d'alarme ALM si un défaut de la machine tournante MAC est détecté.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Il est à noter que l'ordre dans lequel s'enchaînent les étapes d'un procédé conforme à l'invention, notamment en référence aux dessins ci-joints, ne constitue qu'un exemple de réalisation dépourvu de tout caractère limitatif, des variantes étant possibles. En particulier, un procédé conforme à l'invention peut comprendre une ou plusieurs itérations des étapes décrites ci-dessus, notamment en référence aux dessins ci-joints. Par ailleurs, les signes de référence ne sont pas limitatifs de l'étendue de la protection, leur unique fonction étant de faciliter la compréhension des revendications.

## Revendications

1. Procédé de surveillance d'une machine tournante (MAC) à partir d'un signal vibratoire (SIG), la machine tournante (MAC) comprenant une pluralité de sous-systèmes (S_{A}-S_{B}) de pièces mécaniques en rotation (L_{A1}-L_{A2}, L_{B1}-L_{B2}) et le signal vibratoire (SIG) comprenant des contributions vibratoires des sous-systèmes (S_{A}-S_{B}), le procédé comprenant pour au moins un dit sous-système (S_{A}) des étapes consistant à :
- estimer (S210) la contribution vibratoire dudit sous-système (S_{A}) d'un ensemble de moyennes synchrones du signal vibratoire (SIG) comprenant :
∘ des premières moyennes synchrones (M_{A1}-M_{A2}) associées à des fréquences de rotation (F_{A1}-F_{A2}) des pièces dudit sous-système (L_{A1}-L_{A2}) ; et
∘ une ou plusieurs deuxièmes moyennes synchrones (M_{A1,A2}) associées à des multiples des fréquences de rotation (F_{A1}-F_{A2}) des pièces dudit sous-système (L_{A1}-L_{A2}), ces multiples étant communs à au moins deux pièces dudit sous-système (L_{A1}-L_{A2}) ; et à
- déterminer (S310) si ledit sous-système (S_{A}) est défectueux par analyse comparative d'un indicateur dit de santé correspondant à la contribution vibratoire estimée (SIG_{A}) dudit sous-système (S_{A}).

2. Procédé selon la revendication 1, dans lequel la contribution vibratoire (SIG_{A}) dudit sous-système (S_{A}) est estimée (S310) à partir d'une différence entre : une somme desdites premières moyennes synchrones (M_{A1}-M_{A2}) ; et une somme desdites une ou plusieurs deuxièmes moyennes synchrones (M_{A1,A2}).

3. Procédé selon la revendication 2, dans lequel la contribution estimée (SIG_{A}) dudit sous-système (S_{A}) est exprimée par : ${x}_{A} \left(u\right) = {\sum }_{{f}_{i} ∈ {F}_{A}} {m}_{x} \left({f}_{i}, u\right) - {\sum }_{{f}_{i} ∈ {F}_{A}} {\sum }_{\begin{matrix}{f}_{j} ∈ {F}_{A} \\ {f}_{j} > {f}_{i}\end{matrix}} {m}_{x} \left(φ\left({f}_{i}, {f}_{j}\right),u\right) ,$
avec : u, un indice temporel ou angulaire ; *F_{A}*, les fréquences de rotation (F_{A1}-F_{A2}) des pièces (L_{A1}-L_{A2}) dudit sous-système (S_{A}) ; *φ*(*fᵢ,fⱼ*), la plus petite fréquence multiple de *fᵢ* et de *fⱼ* ; et *mₓ*(*fᵢ,u*) la moyenne synchrone du signal vibratoire x(u) associée à la fréquence *fᵢ* et définie par : ${m}_{x} \left({f}_{i}, u\right) = \frac{1}{N} {\sum }_{n = 0}^{N - 1} x \left(u-n⋅{M}_{{f}_{i}}\right) ,$
où *N* est un nombre d'échantillons moyennés, et *M_{fᵢ}* est un nombre d'échantillons pour une période associée à la fréquence *fᵢ*.

4. Procédé selon l'une des revendications 1 à 3, comprenant pour au moins une pièce (L_{A1}) dudit sous-système (S_{A}) des étapes consistant à :
- estimer (S220) la contribution vibratoire (SIG_{A1}) de ladite pièce (L_{A1}) d'un ensemble de moyennes synchrones de la contribution vibratoire estimée (SIG_{A}) dudit sous-système (S_{A}) comprenant :
∘ une troisième moyenne synchrone (N_{A1}) associée à une fréquence de rotation (F_{A1}) de ladite pièce (L_{A1}) ; et
∘ une ou plusieurs quatrièmes moyennes synchrones (N_{A1,A2}) associées à des multiples de la fréquence de rotation (F_{A1}) de ladite pièce (L_{A1}), ces multiples étant communs à ladite pièce (L_{A1}) et à au moins une autre pièce (L_{A2}) dudit sous-système (S_{A}) ; et à
- déterminer (S320) si ladite pièce (L_{A1}) est défectueuse par analyse comparative d'un indicateur dit de santé correspondant à la contribution estimée (SIG_{A1}) de ladite pièce (L_{A1}).

5. Procédé selon la revendication 4, dans lequel la contribution vibratoire (SIG_{A1}) de ladite pièce (L_{A1}) est estimée (S220) à partir d'une différence entre : ladite troisième moyenne synchrone (N_{A1}) ; et une somme desdites une ou plusieurs quatrièmes moyennes synchrones (N_{A1,A2}).

6. Procédé selon la revendication 5, dans lequel la contribution estimée (SIG_{A1}) de ladite pièce (L_{A1}) est exprimée par : ${x}_{A 1} \left(u\right) = {m}_{{x}_{A}} \left({f}_{A 1}, u\right) - {\sum }_{\begin{matrix}{f}_{j} ∈ {F}_{A} \\ {f}_{j} \neq {f}_{A 1}\end{matrix}} {m}_{{x}_{A}} \left(φ\left({f}_{A 1}, {f}_{j}\right),u\right)$
avec : u, un indice temporel ou angulaire ; *f*_{*A*1}, la fréquence de rotation de ladite pièce (L_{A1}) ; *F_{A},* les fréquences de rotation (F_{A1}-F_{A2}) des pièces dudit sous-système (L_{A1}-L_{A2}) ; *φ(f*_{*A*1}*,fⱼ),* la plus petite fréquence multiple de *f*_{*A*1} et de *fⱼ* ; et *m_{x_{A}}*(*fᵢ, u*), la moyenne synchrone de la contribution vibratoire *x_{A}*(*u*) dudit sous-système (S_{A}) associée à la fréquence *fᵢ* et définie par : ${m}_{{x}_{A}} \left({f}_{i}, u\right) = \frac{1}{N} {\sum }_{n = 0}^{N - 1} {x}_{A} \left(u-n⋅{M}_{{f}_{i}}\right) ,$
où *N* est un nombre d'échantillons moyennés, et *M_{fᵢ}* est un nombre d'échantillons pour une période associée à la fréquence *fᵢ*.

7. Procédé selon l'une des revendications 4 à 6, dans lequel si un défaut d'un dit sous-système (S_{A}) est détecté (S310), le procédé comprend pour chacune des pièces (L_{A1}-L_{A2}) du sous-système une étape (S320) consistant à : déterminer si ladite pièce (L_{A1}) est défectueuse par analyse comparative d'un indicateur dit de santé correspondant à la contribution estimée (SIG_{A1}) de ladite pièce.

8. Procédé selon l'une des revendications 1 à 7, comprenant une étape de rééchantillonage (S130) angulaire du signal vibratoire (SIG) par interpolation du signal vibratoire par rapport à un signal de référence (REF) représentatif de la rotation d'un arbre de référence de la machine tournante (MAC).

9. Procédé selon l'une des revendications 1 à 8, comprenant, si un défaut d'un dit sous-système (S_{A}) est détecté (S310), une étape consistant à fournir (S400) un signal d'alarme (ALM) comprenant au moins un identifiant et la contribution estimée (SIG_{A}) du sous-système (S_{A}) défectueux.

10. Dispositif de surveillance d'une machine tournante (MAC) à partir d'un signal vibratoire (SIG), le dispositif (APP) comprenant :
- un module d'estimation (M210) configuré pour estimer la contribution vibratoire d'un sous-système (S_{A}) de la machine tournante (MAC) d'un ensemble de moyennes synchrones du signal vibratoire (SIG) comprenant :
∘ des premières moyennes synchrones (M_{A1}-M_{A2}) associées à des fréquences de rotation (F_{A1}-F_{A2}) des pièces dudit sous-système (L_{A1}-L_{A2}) ; et
∘ une ou plusieurs deuxièmes moyennes synchrones (M_{A1,A2}) associées à des multiples des fréquences de rotation (F_{A1}-F_{A2}) des pièces dudit sous-système (L_{A1}-L_{A2}), ces multiples étant communs à au moins deux pièces dudit sous-système (L_{A1}-L_{A2}) ; et
- un module de détection de défaut (M310) configuré pour déterminer si un dit sous-système (S_{A}) est défectueux par analyse comparative d'un indicateur dit de santé correspondant à la contribution estimée (SIG_{A}) dudit sous-système (S_{A}).

11. Système de surveillance (SYS) comprenant un dispositif d'acquisition (SENS) configuré pour acquérir un signal vibratoire (SIG) et un dispositif de surveillance (APP) selon la revendication 10.

12. Système (SYS) selon la revendication 11, dans lequel le dispositif d'acquisition (SENS) comprend un accéléromètre ou un microphone.

13. Aéronef (AC) comprenant une machine tournante (MAC) et un système de surveillance (SYS) selon la revendication 11 ou 12.

14. Aéronef (AC) selon la revendication 13, dans lequel la machine tournante (MAC) est un moteur à combustion ou un moteur à explosion.

15. Programme d'ordinateur (PROG) comportant des instructions pour mettre en œuvre des étapes (S100-S400) d'un procédé de surveillance selon l'une quelconque des revendications 1 à 9, lorsque ledit programme d'ordinateur (PROG) est exécuté par au moins un processeur (PROC).

## Patentansprüche

1. Verfahren zur Überwachung einer drehenden Maschine (MAC) anhand eines Schwingungssignals (SIG), wobei die drehende Maschine (MAC) eine Vielzahl von Untersystemen (S_{A}-S_{B}) aus rotierenden mechanischen Bauteilen (L_{A1}-L_{A2}, L_{B1}-L_{B2}) umfasst und das Schwingungssignal (SIG) Schwingungsbeiträge der Untersysteme (S_{A}-S_{B}) umfasst, wobei das Verfahren für mindestens ein Untersystem (S_{A}) folgende Schritte umfasst:
- Schätzen (S210) des Schwingungsbeitrags des Untersystems (S_{A}) aus einer Menge synchroner Mittelwerte des Schwingungssignals (SIG), umfassend:
∘ erste synchrone Mittelwerte (M_{A1}-M_{A2}), die den Drehfrequenzen (F_{A1}-F_{A2}) der Bauteile des Untersystems (L_{A1}-L _{A2}) zugeordnet sind; und
∘ einen oder mehrere zweite synchrone Mittelwerte (M_{A1, A2}), die Vielfachen der Drehfrequenzen (F_{A1}-F_{A2}) der Bauteile des Untersystems (L_{A1}-L_{A2}) zugeordnet sind, wobei diese Vielfachen mindestens zwei Bauteilen des Untersystems (L_{A1}-L_{A2}) gemeinsam sind; und
- Bestimmen (S310), ob das Untersystem (S_{A}) defekt ist, durch vergleichende Analyse eines sogenannten Gesundheitsindikators, der dem geschätzten Schwingungsbeitrag (SIG_{A}) des Untersystems (S_{A}) entspricht.

2. Verfahren nach Anspruch 1, wobei der Schwingungsbeitrag (SIG_{A}) des Untersystems (S_{A}) geschätzt wird (S310) anhand einer Differenz zwischen: einer Summe der ersten synchronen Mittelwerte (M_{A1}-M_{A2}); und einer Summe des einen oder der mehreren zweiten synchronen Mittelwerte (M_{A1, A2}).

3. Verfahren nach Anspruch 2, wobei der geschätzte Beitrag (SIG_{A}) des Untersystems (S_{A}) ausgedrückt wird durch: ${x}_{A} \left(u\right) = {\sum }_{{f}_{i} ∈ {F}_{A}} {m}_{x} \left({f}_{i}, u\right) - {\sum }_{{f}_{i} ∈ {F}_{A}} {\sum }_{\begin{matrix}{f}_{j} ∈ {F}_{A} \\ {f}_{j} > {f}_{i}\end{matrix}} {m}_{x} \left(φ\left({f}_{i}, {f}_{j}\right),u\right) ,$
wobei: *u* ein Zeit- oder Winkelindex ist; *F_{A}* die Drehfrequenzen (F_{A1}-F_{A2}) der Bauteile (L_{A1}-L_{A2}) des Untersystems (S_{A}) sind; *φ*(*fᵢ,fⱼ*) die kleinste vielfache Frequenz von *fᵢ* und *fᵢ* ist; und *mₓ(f,u)* der synchrone Mittelwert des Schwingungssignals x(u) ist, der der Frequenz *fᵢ* zugeordnet ist und definiert ist durch: ${m}_{x} \left({f}_{i}, u\right) = \frac{1}{N} {\sum }_{n = 0}^{N - 1} x \left(u-n⋅{M}_{{f}_{i}}\right) ,$
wobei *N* eine Anzahl gemittelter Abtastwerte ist und *M_{fi}* eine Anzahl von Abtastwerten für eine Periode ist, die der Frequenz *fᵢ* zugeordnet ist.

4. Verfahren nach einem der Ansprüche 1 bis 3, umfassend für mindestens ein Bauteil (L_{A1}) des Untersystems (S_{A}) folgende Schritte:
- Schätzen (S220) des Schwingungsbeitrags (SIG_{A1}) des Bauteils (L_{A1}) aus einer Menge synchroner Mittelwerte des geschätzten Schwingungsbeitrags (SIG_{A}) des Untersystems (S_{A}), umfassend:
∘ einen dritten synchronen Mittelwert (N_{A1}), der einer Drehfrequenz (F_{A1}) des Bauteils (L_{A1}) zugeordnet ist; und
∘ einen oder mehrere vierte synchrone Mittelwerte (N_{A1}, _{A2}), die Vielfachen der Drehfrequenz (F_{A1}) des Bauteils (L_{A1}) zugeordnet sind, wobei diese Vielfachen dem Bauteil (L_{A1}) und mindestens einem weiteren Bauteil (L_{A2}) des Untersystems (S_{A}) gemeinsam sind; und
- Bestimmen (S320), ob das Bauteil (L_{A1}) defekt ist, durch vergleichende Analyse eines Gesundheitsindikators, der dem geschätzten Beitrag (SIG_{A1}) des Bauteils (L_{A1}) entspricht.

5. Verfahren nach Anspruch 4, wobei der Schwingungsbeitrag (SIG_{A1}) des Bauteils (L_{A1}) geschätzt wird (S220) aus einer Differenz zwischen: dem dritten synchronen Mittelwert (N_{A1}); und einer Summe des einen oder der mehreren vierten synchronen Mittelwerte (N_{A1, A2}).

6. Verfahren nach Anspruch 5, wobei der geschätzte Beitrag (SIG_{A1}) des Bauteils (L_{A1}) ausgedrückt wird durch: ${x}_{A 1} \left(u\right) = {m}_{{x}_{A}} \left({f}_{A 1}, u\right) - {\sum }_{\begin{matrix}{f}_{j} ∈ {F}_{A} \\ {f}_{j} \neq {f}_{A 1}\end{matrix}} {m}_{{x}_{A}} \left(φ\left({f}_{A 1}, {f}_{j}\right),u\right)$
wobei: *u* ein Zeit- oder Winkelindex ist; *f_{A1}* die Drehfrequenz des Bauteils (L_{A1}) ist; *F_{A}* die Drehfrequenzen (F_{A1}-F_{A2}) der Bauteile des Untersystems (L_{A1}-L_{A2}) sind; *φ(f_{A1},fⱼ)* die kleinste vielfache Frequenz von *f_{A1}* und *fⱼ* ist; und *m_{xA}(fⱼ, u)* der synchrone Mittelwert des Schwingungsbeitrags *x_{A}*(*u*) des Untersystems (S_{A}) ist, der der Frequenz *fᵢ* zugeordnet ist und definiert ist durch: ${m}_{{x}_{A}} \left({f}_{i}, u\right) = \frac{1}{N} {\sum }_{n = 0}^{N - 1} {x}_{A} \left(u-n⋅{M}_{{f}_{i}}\right) ,$
wobei *N* eine Anzahl gemittelter Abtastwerte ist und *M_{fi}* eine Anzahl von Abtastwerten für eine Periode ist, die der Frequenz *fᵢ* zugeordnet ist.

7. Verfahren nach einem der Ansprüche 4 bis 6, wobei, wenn ein Fehler eines Untersystems (S_{A}) erkannt wird (S310), das Verfahren für jedes Bauteil (L_{A1}-L_{A2}) des Untersystems einen Schritt (S320) umfasst, der darin besteht: zu bestimmen, ob das Bauteil (L_{A1}) defekt ist, durch vergleichende Analyse eines sogenannten Gesundheitsindikators, der dem geschätzten Beitrag (SIG_{A1}) des Bauteils entspricht.

8. Verfahren nach einem der Ansprüche 1 bis 7, umfassend einen Schritt der winkelbezogenen Neuabtastung (S130) des Schwingungssignals (SIG) durch Interpolation des Schwingungssignals in Bezug auf ein Referenzsignal (REF), das für die Rotation einer Referenzwelle der drehenden Maschine (MAC) repräsentativ ist.

9. Verfahren nach einem der Ansprüche 1 bis 8, umfassend, wenn ein Fehler eines Untersystems (S_{A}) erkannt wird (S310), einen Schritt, der darin besteht, ein Alarmsignal (ALM) bereitzustellen (S400), das mindestens eine Kennung und den geschätzten Beitrag (SIG_{A}) des defekten Untersystems (S_{A}) umfasst.

10. Überwachungsvorrichtung für eine drehende Maschine (MAC) anhand eines Schwingungssignals (SIG), wobei die Vorrichtung (APP) umfasst:
- ein Schätzmodul (M210), das konfiguriert ist, den Schwingungsbeitrag eines Untersystems (S_{A}) der drehenden Maschine (MAC) aus einer Menge synchroner Mittelwerte des Schwingungssignals (SIG) zu schätzen, umfassend:
∘ erste synchrone Mittelwerte (M_{A1}-M_{A2}), die den Drehfrequenzen (F_{A1}-F_{A2}) der Bauteile des Untersystems (L_{A1}-L _{A2}) zugeordnet sind; und
∘ einen oder mehrere zweite synchrone Mittelwerte (M_{A1}, _{A2}), die Vielfachen der Drehfrequenzen (F_{A1}-F_{A2}) der Bauteile des Untersystems (L_{A1}-L_{A2}) zugeordnet sind, wobei diese Vielfachen mindestens zwei Bauteilen des Untersystems (L_{A1}-L_{A2}) gemeinsam sind; und
- ein Fehlererkennungsmodul (M310), das konfiguriert ist zu bestimmen, ob ein Untersystem (S_{A}) fehlerhaft ist, durch vergleichende Analyse eines sogenannten Gesundheitsindikators, der dem geschätzten Beitrag (SIG_{A}) des Untersystems (S_{A}) entspricht.

11. Überwachungssystem (SYS), umfassend eine Erfassungsvorrichtung (SENS), die konfiguriert ist, ein Schwingungssignal (SIG) zu erfassen, und eine Überwachungsvorrichtung (APP) nach Anspruch 10.

12. System (SYS) nach Anspruch 11, wobei die Erfassungsvorrichtung (SENS) einen Beschleunigungsmesser oder ein Mikrofon umfasst.

13. Luftfahrzeug (AC), umfassend eine drehende Maschine (MAC) und ein Überwachungssystem (SYS) nach Anspruch 11 oder 12.

14. Luftfahrzeug (AC) nach Anspruch 13, wobei die drehende Maschine (MAC) ein Verbrennungsmotor oder ein Explosionsmotor ist.

15. Computerprogramm (PROG), das Anweisungen umfasst, um die Schritte (S100-S400) eines Überwachungsverfahrens nach einem der Ansprüche 1 bis 9 auszuführen, wenn das Computerprogramm (PROG) von mindestens einem Prozessor (PROC) ausgeführt wird.

## Claims

1. A method for monitoring a rotary machine (MAC) based on a vibration signal (SIG), the rotary machine (MAC) comprising a plurality of subsystems (S_{A}-S_{B}) of mechanical parts in rotation (L_{A1}-L_{A2}, L_{B1}-L_{B2}) and the vibration signal (SIG) comprising vibrational contributions of the subsystems (S_{A}-S_{B}), the method comprising, for at least one said subsystem (S_{A}), steps consisting in:
- estimating (S210) the vibrational contribution of said subsystem (S_{A}) from a set of synchronous averages of the vibration signal (SIG) comprising:
∘ first synchronous averages (M_{A1}-M_{A2}) associated with rotation frequencies (F_{A1}-F_{A2}) of the parts of said subsystem (L_{A1}-L_{A2}); and
∘ one or more second synchronous averages (M_{A1,A2}) associated with multiples of the rotation frequencies (F_{A1}-F_{A2}) of the parts of said subsystem (L_{A1}-L_{A2}), these multiples being shared by at least two parts of said subsystem (L_{A1}-L_{A2}); and in
- determining (S310) whether or not said subsystem (S_{A}) is faulty by comparative analysis of a so-called health indicator corresponding to the estimated vibrational contribution (SIG_{A}) of said subsystem (S_{A}).

2. The method according to claim 1, wherein the vibrational contribution (SIG_{A}) of said subsystem (S_{A}) is estimated (S310) based on a difference between: a sum of said first synchronous averages (M_{A1}-M_{A2}); and a sum of said one or more second synchronous averages (M_{A1,A2}).

3. The method according to claim 2, wherein the estimated contribution (SIG_{A}) of said subsystem (S_{A}) is expressed by: ${x}_{A} \left(u\right) = {\sum }_{{f}_{i} ∈ {F}_{A}} {m}_{x} \left({f}_{i}, u\right) - {\sum }_{{f}_{i} ∈ {F}_{A}} {\sum }_{\begin{matrix}{f}_{i} ∈ {F}_{A} \\ {f}_{j} > {f}_{i}\end{matrix}} {m}_{x} \left(φ\left({f}_{i}, {f}_{j}\right),u\right) ,$ with: u, a time-domain or angular index; *F_{A},* the rotation frequencies (F_{A1}-F_{A2}) of the parts (L_{A1}-L_{A2}) of said subsystem (S_{A}); *φ*(*fᵢ,fⱼ*), the lowest frequency that is a multiple of *fᵢ* and of *fⱼ;* and *mₓ*(*fᵢ,u*) the synchronous average of the vibration signal *x*(*u*) associated with the frequency *fᵢ* and defined by: ${m}_{x} \left({f}_{i}, u\right) = \frac{1}{N} {\sum }_{n = 0}^{N - 1} x \left(u-n⋅{M}_{{f}_{i}}\right) ,$ where *N* is a number of averaged samples, and *M_{fᵢ}* is a number of samples for a period associated with the frequency *fᵢ*.

4. The method according to one of claims 1 to 3, comprising for at least one part (L_{A1}) of said subsystem (S_{A}) steps consisting in:
- estimating (S220) the vibrational contribution (SIG_{A1}) of said part (L_{A1}) from a set of synchronous averages of the estimated vibrational contribution (SIG_{A}) of said subsystem (S_{A}) comprising:
∘ a third synchronous average (N_{A1}) associated with a rotation frequency (F_{A1}) of said part (L_{A1}); and
∘ one or more fourth synchronous averages (N_{A1,A2}) associated with multiples of the rotation frequency (F_{A1}) of said part (L_{A1}), these multiples being shared by said part (L_{A1}) and by at least one other part (L_{A2}) of said subsystem (S_{A}); and by
- determining (S320) whether or not said part (L_{A1}) is faulty by comparative analysis of a so-called health indicator corresponding to the estimated contribution (SIG_{A1}) of said part (L_{A1}).

5. The method according to claim 4, wherein the vibrational contribution (SIG_{A1}) of said part (L_{A1}) is estimated (S220) based on a difference between: said third synchronous average (N_{A1}); and a sum of said one or more fourth synchronous averages (N_{A1,A2}).

6. The method according to claim 5, wherein the estimated contribution (SIG_{A1}) of said part (L_{A1}) is expressed by: ${x}_{A 1} \left(u\right) = {m}_{{x}_{A}} \left({f}_{A 1}, u\right) - {\sum }_{\begin{matrix}{f}_{j} ∈ {F}_{A} \\ {f}_{j} \neq {f}_{A 1}\end{matrix}} {m}_{{x}_{A}} \left(φ\left({f}_{A 1}, {f}_{j}\right),u\right)$ with: u, a time-domain or angular index; *f*_{*A*1}, the rotation frequency of said part (L_{A1}); *F_{A},* the rotation frequencies (F_{A1}-F_{A2}) of the parts of said subsystem (L_{A1}-L_{A2}); *φ*(*f*_{*A*1},*fⱼ*), the lowest frequency that is a multiple of *f*_{*A*1} and of *fⱼ*; and *m_{x_{A}}*( *fᵢ,u*), the synchronous average of the vibrational contribution *x_{A}*(*u*) of said subsystem (S_{A}) associated with the frequency *fᵢ* and defined by: ${m}_{{x}_{A}} \left({f}_{i}, u\right) = \frac{1}{N} {\sum }_{n = 0}^{N - 1} {x}_{A} \left(u-n⋅{M}_{{f}_{i}}\right) ,$ where *N* is a number of averaged samples, and *M_{fᵢ}* is a number of samples for a period associated with the frequency *fᵢ*.

7. The method according to one of claims 4 to 6, wherein if a fault in a said subsystem (S_{A}) is detected (S310), the method comprises for each of the parts (L_{A1}-L_{A2}) of the subsystem a step (S320) consisting in: determining whether or not said part (L_{A1}) is faulty by comparative analysis of a so-called health indicator corresponding to the estimated contribution (SIG_{A1}) of said part.

8. The method according to one of claims 1 to 7, comprising a step (S130) of angular resampling of the vibration signal (SIG) by interpolation of the vibration signal with respect to a reference signal (REF) representative of the rotation of a reference shaft of the rotary machine (MAC).

9. The method according to one of claims 1 to 8, comprising, if a fault of a said subsystem (S_{A}) is detected (S310), a step consisting in supplying (S400) an alert signal (ALM) comprising at least one identifier and the estimated vibrational contribution (SIG_{A}) of the faulty subsystem (S_{A}).

10. A device for monitoring a rotary machine (MAC) based on a vibration signal (SIG), the device (APP) comprising:
- an estimating module (M210) configured to estimate the vibrational contribution of a subsystem (S_{A}) of the rotary machine (MAC) from a set of synchronous averages of the vibration signal (SIG) comprising:
o first synchronous averages (M_{A1}-M_{A2}) associated with rotation frequencies (F_{A1}-F_{A2}) of the parts of said subsystem (L_{A1}-L_{A2}); and
∘ one or more second synchronous averages (M_{A1,A2}) associated with multiples of the rotation frequencies (F_{A1}-F_{A2}) of the parts of said subsystem (L_{A1}-L_{A2}), these multiples being shared by at least two parts of said subsystem (L_{A1}-L_{A2}); and
- a fault detecting module (M310) configured to determine whether or not a said subsystem (S_{A}) is faulty by comparative analysis of a so-called health indicator corresponding to the estimated contribution (SIG_{A}) of said subsystem (S_{A}).

11. A monitoring system (SYS) comprising an acquiring device (SENS) configured to acquire a vibration signal (SIG) and a monitoring device (APP) according to claim 10.

12. The system (SYS) according to claim 11, wherein the acquiring device (SENS) comprises an accelerometer or a microphone.

13. An aircraft (AC) comprising a rotary machine (MAC) and a monitoring system (SYS) according to claim 11 or 12.

14. The aircraft (AC) according to claim 13, wherein the rotary machine (MAC) is a combustion engine or an internal combustion engine.

15. A computer program (PROG) including instructions for implementing the steps (S100-S400) of a monitoring method according to any of claims 1 to 9, when said computer program (PROG) is executed by at least one processor (PROC).
